**Europäisches Patentamt**

(19) **European Patent Office**

**Office européen des brevets**

(11) Veröffentlichungsnummer: **0 017 868**
**B1**

(12) **EUROPÄISCHE PATENTSCHRIFT**

(45) Veröffentlichungstag der Patentschrift:
03.03.82

(51) Int. Cl.³: **F 16 K 31/42,** F 15 B 13/043,
F 16 K 37/00

(21) Anmeldenummer: **80101803.7**

(22) Anmeldetag: **03.04.80**

(54) Arbeitsüberwachte Ventilanordnung.

(30) Priorität: **19.04.79 DE 2915783**

(43) Veröffentlichungstag der Anmeldung:
**29.10.80 Patentblatt 80/22**

(45) Bekanntmachung des Hinweises auf die Patenterteilung:
**03.03.82 Patentblatt 82/9**

(84) Benannte Vertragsstaaten:
**FR GB IT SE**

(56) Entgegenhaltungen:
**DE-A-2409777**
**DE-B-1121424**
**FR-A-1249362**
**FR-A-2023027**

(73) Patentinhaber: **Sperry Vickers Zweigniederlassung der Sperry GmbH, Postfach 2327, D-6380 Bad Homburg v.d.H. (DE)**

(72) Erfinder: **Hemm, Ansgar, Kantstrasse 13, D-6390 Usingen 2 (DE)**
Erfinder: **Deppner-Hiemesch, Harald, Im unteren Stichel 7c, D-6380 Bad Homburg v.d.H. (DE)**

(74) Vertreter: **Zwirner, Gottfried, Dipl.-Ing. Dipl.-W.-Ing. et al, BLUMBACH-WESER-BERGEN-KRAMER ZWIRNER-HOFFMANN Patentanwälte Sonnenberger Strasse 43, D-6200 Wiesbaden 1 (DE)**

Arbeitsüberwachte Ventilanordnung

Die Erfindung bezieht sich auf eine arbeitsüberwachte Ventilanordnung, enthaltend ein Hauptventil mit Schliessstück zum Absperren oder Durchschalten einer hydraulischen Hauptleitung, ein Steuerventil zur Druckbeaufschlagung oder Druckentlastung einer hydraulischen Steuerleitung zum Hauptventil und eine elektrische Schalteinrichtung zum Abtasten der Zustände der Ventile.

Aus Sicherheitsgründen werden hydraulische Pressensteuerungen überwacht. Hierzu werden arbeitsüberwachte Ventilanordnungen der oben angegebenen Art in den Hydraulikkreislauf eingesetzt. Üblicherweise sind wenigstens zwei Hauptventile mit zugehörigen Steuerventilen zwischen Pumpe und Presse und zwei weitere Hauptventile mit zugehörigen Steuerventilen zwischen Presse und Sumpf angeordnet (Broschüre der Fa. Rexroth, „Hydraulik Training", S. 3, Bild 2). Das ordnungsgemässe Arbeiten dieser Ventile wird dadurch überwacht, dass das Erreichen einer bestimmten Position der beweglichen Ventilteile (hydraulisch) festgestellt wird. Dies kann auch elektrisch, mittels jeweils eines elektrischen Schalters/Ventil festgestellt werden. Es werden somit wenigstens vier elektrische Schalter für die vier Hauptventile und zusätzliche Schalter für die Steuerventile benötigt, deren Meldungen über UND-Verknüpfungsglieder zusammengeführt werden. Da das Erreichen einer bestimmten Position von Ventilgliedern überwacht wird, ist nicht in jedem Fall gewährleistet, dass die Gesamtfunktion der Ventilanordnung überwacht worden ist.

Der Erfindung liegt deshalb die Aufgabe zugrunde, eine arbeitsüberwachte Ventilanordnung zu schaffen, die eine grössere Sicherheit durch Überwachung der Gesamtfunktion bietet und einfacher aufgebaut ist.

Die gestellte Aufgabe wird aufgrund der Massnahmen des Anspruches 1 gelöst.

Indem nur noch ein einziger Schalter zur Überwachung sowohl jedes Hauptventils als auch des zugehörigen Steuerventils benötigt wird, ist die arbeitsüberwachte Ventilanordnung einfacher geworden. Es wird nicht mehr das Erreichen einer bestimmten Position des Steuerventils abgetastet, sondern festgestellt, ob das Steuerventil richtig funktioniert, d.h. den Steuerdruck durchgeschaltet hat oder abgesperrt hat. Auf diese Weise wird eine grössere Sicherheit erzielt. Zweckmässige Weiterbildungen der Erfindung sind den Ansprüchen 2 bis 4 zu entnehmen.

Für eine von einer Pumpe zu einem Verbraucher, z.B. einer Presse, führende Hauptleitung ist eine weitere Vereinfachung der Überwachung möglich, und zwar wird die Gesamtfunktion eines zweiten, zur Ableitung des Hydraulikstroms vor dem ersten Hauptventil vorgesehenen Hauptventils und eines zugehörigen zweiten Steuerventils mit dem einen (einzigen) elektrischen Schalter überwacht, der dem ersten Hauptventil und dem ersten Steuerventil räumlich zugeordnet ist, falls der Steuerdruck für das erste Hauptventil von der vom zweiten Hauptventil gesteuerten Hauptleitung entnommen wird.

Ein Ausführungsbeispiel der Erfindung wird anhand der Zeichnung beschrieben. Dabei zeigt:

Fig. 1 eine Prinzipschaltung für eine überwachte Pressensteuerung, bei der nur die zur Überwachung erforderlichen Ventile dargestellt sind,

Fig. 2 eine Ventilanordnung für die Schaltung nach Fig. 1,

Fig. 3 eine Einzelheit der Schaltung aus Fig. 1 für den Zustand Presse vor,

Fig. 4 die gleiche Einzelheit für den Zustand Presse zurück, und

Fig. 5 die gleiche Einzelheit für den Zustand Presse drucklos.

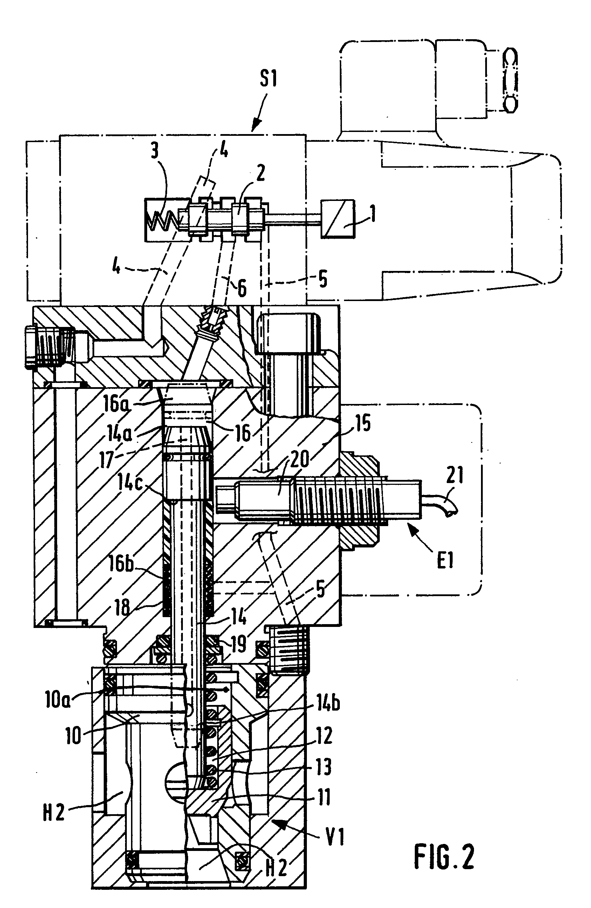

Von einer Pumpe P führt eine Hauptleitung H1 über einen Anschluss A zu einer Presse PR und eine zweite Hauptleitung H2 von der Presse PR über nicht dargestellte weitere Ventile zu einem Tank. Im Zuge der zweiten Hauptleitung H2 sind zwei Hauptventile V1 und V2 angeordnet. Dem Hauptventil V1 ist ein elektromagnetisch betätigbares Steuerventil S1 und ein elektrischer Schalter E1 zugeordnet und in gleicher Weise sind dem Hauptventil V2 ein Steuerventil S2 und ein elektrischer Schalter E2 zugeordnet. Die Teile V1, S1, E1 bilden eine Baugruppe, die in Fig. 2 näher dargestellt ist, desgleichen die Teile V2, S2 und E2. In der Hauptleitung H1 ist ein Hauptventil V5 und ein zugehöriges elektromagnetisch betätigbares Steuerventil S5 angeordnet, während ein weiteres Hauptventil V6 in einer von der Hauptleitung H1 abzweigenden Leitung H3 zum Tank T1 liegt und von einem elektromagnetisch betätigbaren Steuerventil S6 gesteuert wird. Zur Überwachung der Gesamtfunktion der Baugruppe aus den Teilen V5, S5, V6, S6 wird nur ein elektrischer Schalter E3 benötigt, wobei die Teile V5, S5, E3, wie in Fig. 2 dargestellt, zueinander angeordnet sind, d.h. eine ähnliche Baugruppe darstellen wie die Teile V1, S1, E1 bzw. V2, S2, E2.

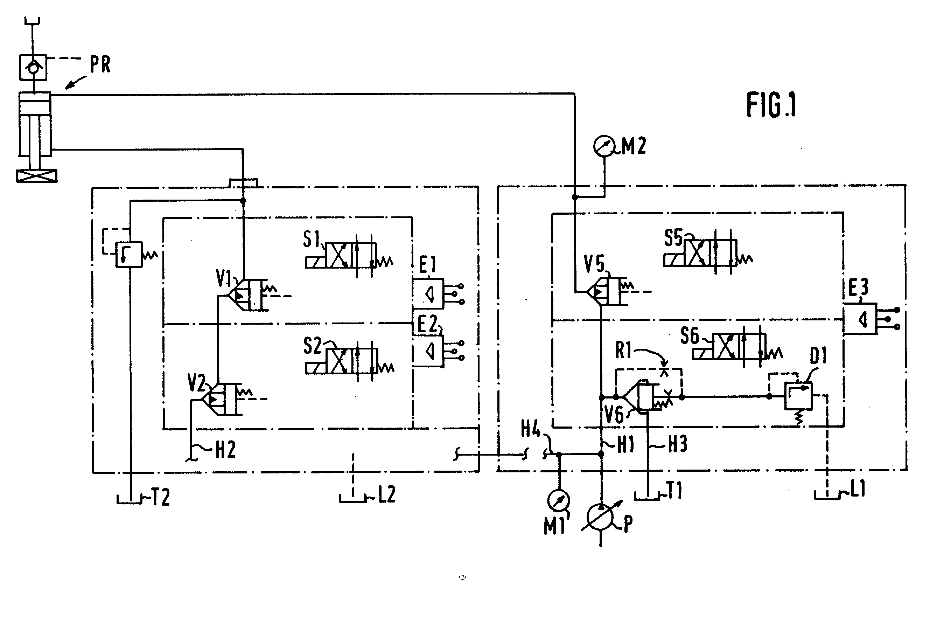

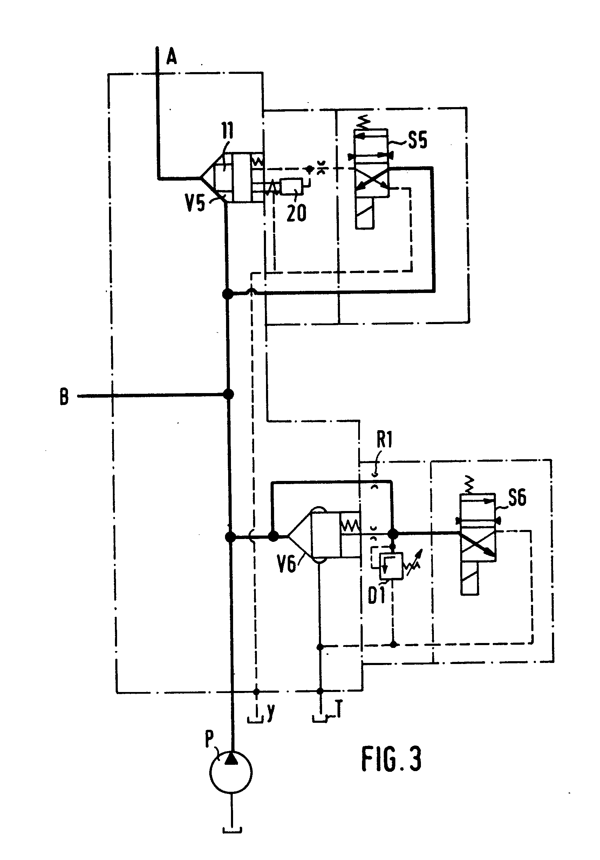

In der Schaltung (Fig. 1) sind noch dargestellt Leckölleitungen L1, L2, y (Fig. 3 bis 5) Manometer $M_1$, $M_2$, eine Hauptleitung H4 als Verbindungsleitung für Rückzug der Presse, Anschlüsse A und B (Fig. 3 bis 5) als Beaufschlagungszufluss zum Pressen mit dem Presskolben bzw. für Rückzug des Presskolbens und Tankleitungen T, $T_1$, $T_2$.

Fig. 2 zeigt einen Teilschnitt durch die vorstehend genannten Baugruppen. Das elektromagnetisch betätigbare Steuerventil S1 (bzw. S2, S5, S6) ist konventioneller Bauart, weswegen die Einzelheiten nur schematisch angegeben sind. Es sind ein Elektromagnet 1, ein Schieberkolben 2, eine Rückholfeder 3, ein Hydraulikdruck-Zuführkanal 4, ein Tankkanal 5 und ein Arbeitskanal 6 vorgesehen. Das Hauptventil V1 (bzw. V2, V5) weist ein im Inneren 10a eines Gehäuses 10 verschiebbares Schliessstück 11 auf, welches die Hauptleitung H2 in der dargestellten Lage sperrt, beim Abheben jedoch freigibt. Das Schliessstück 11 ist als Differenzdruckkolben ausgebildet und weist einen innenliegenden Raum 12, auf, der den Sitz für eine Andrückfeder 13 bildet und das eine Ende eines Stufenkolbens 14 aufnimmt, der in einer Bohrung 16 eines Gehäuseteils 15 geführt ist. Der Stufenkolben 14 weist einen Kolbenteil 14a grösserer Querschnittsfläche und einen Kolbenteil 14b kleinerer Querschnittsfläche auf, die durch eine Stufe 14c voneinander getrennt sind. Ein Längskanal 17 erstreckt sich längs durch den Stufenkolben 14. Die Bohrung 16 wird durch den Kolbenteil 14a in einen Raum 16a und einen Raum 16b unterteilt. Der Raum 16a steht mit dem Arbeitskanal 6 und über den Längskanal 17 mit dem Raum 12 in hydraulischer Verbindung. Der Raum 16b ist mit dem Tankkanal 5 verbunden. Im Raum 16b ist ferner eine Rückholfeder 18 für den Stufenkolben 14 untergebracht, die sich am Gehäuse nahe bei einem Abdichteinsatz 19 abstützt und den Stufenkolben 14 in Richtung auf das Steuerventil S1 drängt. Im Bereich der Stufe 14c des Kolbenteils 14a ist der Schalter E1 angeordnet, der im vorliegenden Ausführungsbeispiel als Näherungsschalter 20 ausgebildet ist, d.h. bei Annäherung der Stufe 14c sein elektromagnetisches Verhalten ändert, was über eine Leitung 21 abgefragt werden kann.

Der Betrieb der in Fig. 2 dargestellten Ventilanordnung geht wie folgt vor sich: Nach Erregen des Magneten 1 wird die dargestellte Kolbenschieberlage erreicht, wobei unter Druck stehende Steuerflüssigkeit über die Kanäle 4 und 6 in den Raum 16a gelangt und den Stufenkolben 14 in der Zeichnung nach unten verschiebt. Über den Längskanal 17 gelangt die unter Druck stehende Steuerflüssigkeit in den Raum 12 und auf die Oberseite des Schliessstückes 11, so dass dieses auf den Ventilsitz gepresst wird und die Hauptleitung H2 abgesperrt hält. Der Stufenkolben 14 nimmt die dargestellte Lage ein, was durch den Näherungsschalter 20 aufgrund der Lage der Stufe 14c feststellbar ist. Wenn das Schliessstück 11 nicht geschlossen hätte, also von dem Ventilsitz abgehoben wäre, dann wäre der Stufenkolben 14 wegen der Anlage des Kolbenteiles 14b im Inneren des Schliessstückes 11 angehoben, so dass die Stufe 14c nicht mehr dem Näherungsschalter 20 gegenüberliegen würde. Die Position des Schliessstückes 11 wird also hinsichtlich der Schliesslage zuverlässig überwacht. Der Stufenkolben 14 wird (oder bleibt) aber auch dann angehoben, wenn in dem Raum 16a kein die Feder 18 überwindender Druck herrscht. Somit wird die richtige Arbeitsweise (Funktion) des Steuerventils S1 überwacht.

Wenn das Steuerventil S1 in die andere, nicht dargestellte Lage umgeschaltet wird, sind die Kanäle 5 und 6 miteinander verbunden und die Räume 16a und 12 werden drucklos. Das Schliessstück 11, welches einen Differenzdruckkolben darstellt, hebt deshalb ab. Der Stufenkolben 14 nimmt daraufhin die obere, gestrichelt dargestellte Lage ein. Verlässt der Stufenkolben 14 die untere Lage, so ist dies durch den Näherungsschalter 20 feststellbar.

Die in Fig. 1 dargestellte Hintereinanderschaltung zweier arbeitsüberwachter Ventilanordnungen V1, S1, E1 und V2, S2, E2 stellt eine vorgeschriebene Sicherheitsmassnahme bei Pressensteuerungen dar. Die Baueinheit V5, S5, E3 ist grundsätzlich wie die in Fig. 2 dargestellte Baueinheit ausgebildet, in der dargestellten Schaltung können aber ein weiteres Hauptventil und zugehöriges Steuerventil mit überwacht werden. Diese Baueinheit V6, S6 weist eine Drosselleitung R1 auf, welche das Hauptventil V6 überbrückt und über ein Druckbegrenzungsventil D1 entlädt. Wenn der Presse PR Hydraulikdruck zugeführt werden soll, wird das Hauptventil V5 über das zugehörige Steuerventil S5 geöffnet und das Hauptventil V6 mittels des zugehörigen Steuerventils S6 geschlossen gehalten. Die Erfüllung dieser Bedingung kann durch den Schalter E3 festgestellt werden. Falls nämlich das Hauptventil V6 geöffnet wäre, würde der Druck zusammenbrechen, weil die Hydraulikflüssigkeit unmittelbar über die Leitung H3 zum Tank zurückfliessen könnte; das Fehlen des Druckes beim Hauptventil V5 führt aber dazu, dass dieses durch die Schliessfeder 13 geschlossen gehalten wird und die Feder 18 den Stufenkolben 14 anheben kann, so dass der Näherungsschalter 20 bzw. E3 die Diskrepanz zwischen dem eingegebenen Befehl und der ausgeführten Operation feststellen würde. In Fig. 3 sind die Hydraulikstromverläufe schematisch angedeutet, woraus sich ergibt, dass das Schliessstück 11 des Hauptventils V5 in Folge des hinter ihm herrschenden Niederdruckes nicht angepresst gehalten werden kann, während beim Hauptventil V6 eine entsprechende Anpressung des Schliessstückes erfolgt.

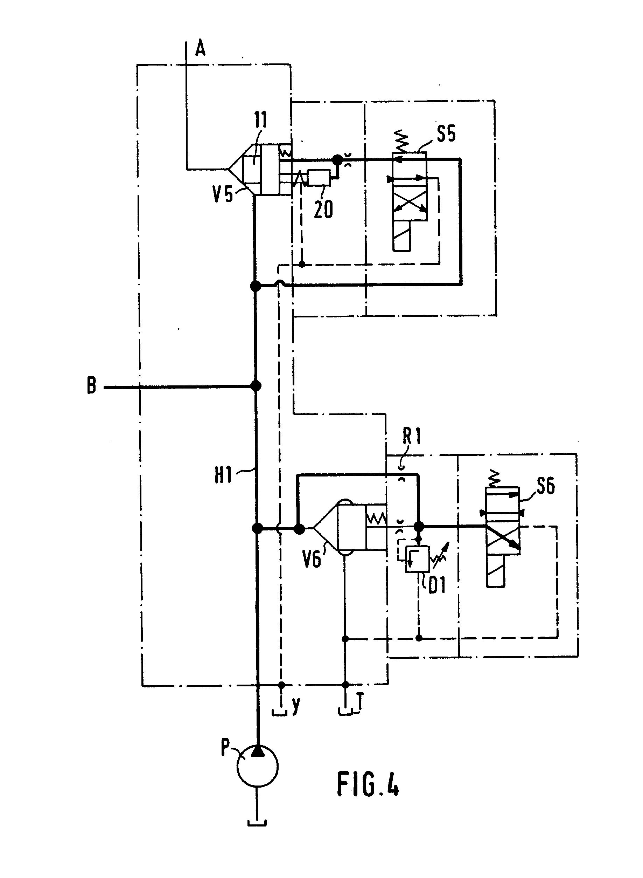

In Fig. 4 ist schematisch angedeutet, wie die Presse auf Rückzug geschaltet wird. Die Schliessstücke der beiden Ventile V5 und V6 erhalten vollen Öldruck von der Rückseite, was durch entsprechende Stellung der Steuerventile S5 und S6 erzielt wird, wie dargestellt. Zu diesem Betriebszustand gehört die Schalterstellung „zu" des Schalters 20. Wenn dies nicht festgestellt wird, ist ein Fehler aufgetreten. Es sei beispielsweise angenommen, dass das Hauptventil V6 nicht geschlossen hätte. Dann würde der Druck in der Hauptleitung H1 zusammenbrechen, woraufhin der Schalter 20 nicht mehr die geschlossene Lage einnehmen könnte, weil die Feder 18 den Stufenkolben 14 anheben würde.

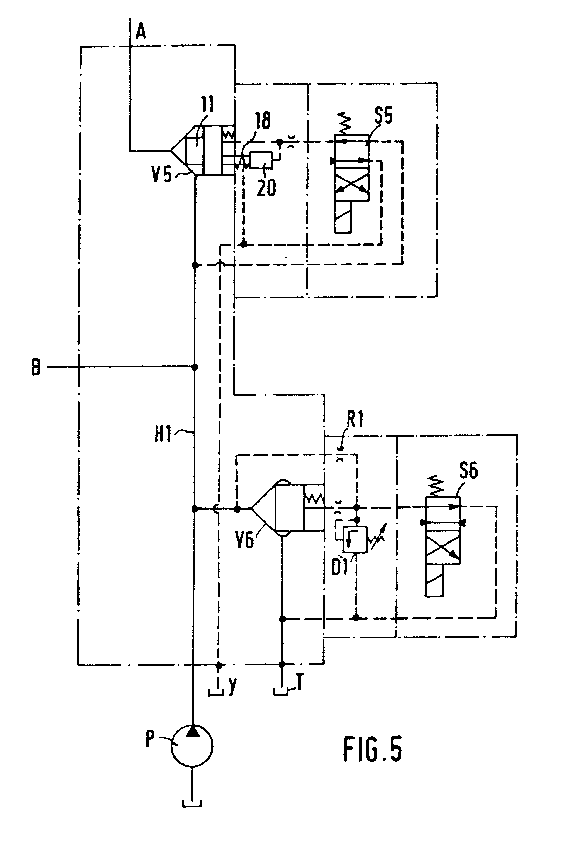

In Fig. 5 ist der drucklose Umlauf der Pressensteuerung dargestellt. In diesem Fall ist das Hauptventil V6 geöffnet, so dass der Druck auf der Hauptleitung H1 zusammenbricht mit der Folge, dass der Stufenkolben 14 durch die Feder 18 angehoben wird, was durch den Schalter 20 festgestellt wird.

## Patentansprüche

1. Arbeitsüberwachte Ventilanordnung, enthalted ein Hauptventil (V1) mit Schliessstück (11) zum Absperren oder Durchschalten einer hydraulischen Hauptleitung (H2), ein Steuerventil (S1) zur Druckbeaufschlagung oder Druckentlastung einer hydraulischen Steuerleitung (6, 16) zu dem Hauptventil (V1) und eine elektrische Schalteinrichtung (E1) zum Abtasten der Zustände der Ventile (V1, S1), gekennzeichnet durch folgende Merkmale:

— in der Steuerleitung (6, 16) zwischen Steuerventil (S1) und Hauptventil (V1) liegt ein verschiebbarer Stufenkolben (14) mit einem Kolbenteil grösserer Querschnittsfläche (14a), mit einem Kolbenteil kleinerer Querschnittsfläche (14b) sowie mit einer Stufe (14c) und mit einem Längskanal (17), der einen Teil der Steuerleitung bildet;

— der Kolbenteil grösserer Querschnittsfläche (14a) ist dem Steuerventil (S1) zugewandt, der Kolbenteil kleinerer Querschnittsfläche (14b) liegt im Bewegungsbereich des Schliessstückes (11) des Hauptventils (V1);

— eine Rückholeinrichtung (18) ist zur Rückführung des Stufenkolbens (14) zum Steuerventil (S1) hin vorgesehen, und

— ein elektrischer Schalter (E1), die elektrische Schalteinrichtung bildend, ist zur Abtastung der Lage des Stufenkolbens (14) diesem räumlich zugeordnet.

2. Ventilanordnung nach Anspruch 1, dadurch gekennzeichnet, dass die Rückholeinrichtung durch eine Feder (18) gebildet wird, die in einem drucklosen Raum (16b) angeordnet ist und den Stufenkolben (14) in Richtung auf das Steuerventil (S1) drängt.

3. Ventilanordnung nach einem der beiden Ansprüche 1 oder 2, dadurch gekennzeichnet, dass der elektrische Schalter (E1) ein Näherungsschalter (20) ist und in der Schliessstellung des Hauptventils (V1) der Stufe (14c) des Stufenkolbens (14) gegenüberliegt.

4. Ventilanordnung (V5, S5, E3) nach einem der Ansprüche 1 bis 3, für eine von einer Pumpe (P) zu einem Verbraucher (PR) führende Hauptleitung (H1), dadurch gekennzeichnet, dass ein zweites, durch ein zweites Steuerventil (S6) gesteuertes Hauptventil (V6) zum Ableiten des Hydraulikstromes vor dem ersten Hauptventil (V5) vorgesehen ist, und dass der Steuerdruck für das erste Hauptventil (V5) von der Hauptleitung (H1) vor dem ersten Hauptventil (V5) abgezweigt wird, wobei der Schaltzustand Ableiten des Hydraulikstromes und damit das Arbeiten des zweiten Steuerventils (S6) und des zweiten Hauptventils (V6) von dem elektrischen Schalter (E3) überwacht wird, der dem ersten Hauptventil (V5) und dem ersten Steuerventil (S5) zugeordnet ist.

## Claims

1. A valve arrangement the proper operation of which is monitored and which comprises a main valve (V1) with a closure member (11) for shutting off or opening a hydraulic main line (H2), a pilot valve (S1) for admitting pressure to or discharging it from a hydraulic control line (6, 16) to the main valve (V1), and an electrical switching means (E1) for sensing the states of the valves (V1, S1), characterizied by the following features:

— the control line (6, 16) between the pilot valve (S1) and the main valve (V1) contains a displaceable spool (14), one part of which has a large cross-sectional area (14a) and one part a small cross-sectional area (14b), said spool also comprising a step (14c) and a longitudinal duct (17) forming part of the control line;

— the spool part of large cross-sectional area (14a) faces the control valve (S1), and the spool part of small cross-sectional area (14b) is situated in the range of movement of the closure member (11) of the main valve (V1);

— a return mechanism (18) is provided to return the spool (14) towards the pilot valve (S1), and

— an electric switch (E1) which forms the electrical switching means is physically associated with the spool (14) in order to sense its position.

2. A valve arrangement according to claim 1, characterized in that the return mechanism is formed by a spring (18) disposed in a pressureless chamber (16b) and urging the spool (14) towards the control valve (S1).

3. A valve arrangement according to claim 1 or 2, characterized in that the electric switch (E1) is a proximity switch (20) and faces the step (14c) of the spool (14) when the main valve (V1) is in the closed position.

4. A valve arrangement (V5, S5, E3) according to any one of the claims 1 to 3, for a main line (H1) leading from a pump (P) to a user (PR), characterized in that a second main valve (V6) controlled by a second pilot valve (S6) is provided to branch off the hydraulic flow upstream of the first main valve (V5), and that the control pressure for the first main valve (V5) is branched off from the main line (H1) upstream of the first main valve (V5), the fact that the state has been switched to hydraulic flow branch-off and, hence, that the second pilot valve (S6) and the second main valve (V6) are operating being monitored by the electric switch (E3) associated with the first main valve (V5) and the first pilot valve (S5).

## Revendications

1. Disposition de valves à fonctionnement surveillé comportant une valve principale (V1) avec obturateur (11) servant à fermer ou à ouvrir une conduite hydraulique principale (H2), une valve pilote (S1) servant à mettre sous pression ou à décharger de pression une conduite hydraulique de pilotage (6, 16) menant à la valve principale (V1) et un dispositif électrique de manœuvre (E1) servant à détecter les états des valves (V1, S1), caractérisée par les points suivants:

— dans la conduite de pilotage (6, 16) est placé, entre la valve pilote (S1) et la valve principale (V1), un piston à gradin (14) pouvant coulisser, comportant une partie de piston à plus grande aire de section (14a), une partie de piston à plus petite aire de section (14b) et un gradin (14c), ainsi qu'un canal longitudinal (17) qui forme une partie de la conduite de pilotage;

— la partie de piston à plus grande aire de section (14a) est tournée vers la valve pilote (S1), la partie de piston à plus petite aire de section (14b) est située dans la région de mouvement de l'obturateur (11) de la valve principale (V1);

— un dispositif de rappel (18) est prévu pour ramener le piston à gradin (14) en direction de la valve pilote (S1), et

— un interrupteur électrique (E1) formant le dispositif électrique de manœuvre est adjoint physiquement au piston à gradin (14) pour détecter la position de celui-ci.

2. Disposition de valves selon la revendication 1, caractérisée par le fait que le dispositif de rappel est formé d'un ressort (18) qui est disposé dans une cavité dépourvue de pression (16b) et sollicite le piston à gradin (14) en direction de la valve pilote (S1).

3. Disposition de valves selon l'une des revendications 1 ou 2, caractérisée par le fait que l'interrupteur électrique (E1) est un interrupteur de proximité (20) et que, dans la position de fermeture de la valve principale (V1), il se trouve en face du gradin (14c) du piston à gradin (14).

4. Disposition de valves (V5, S5, E3) selon l'une des revendications 1 à 3, destinée à une conduite principale (H1) menant d'une pompe (P) à un consommateur (PR), et caractérisée par le fait qu'une deuxième valve principale (V6) pilotée par une deuxième valve pilote (S6) est prévue pour détourner le courant hydraulique avant la première valve principale (V5) et par le fait que la pression de pilotage destinée à la première valve principale (V5) est détournée de la conduite principale (H1) avant la première valve principale (V5), l'état de manœuvre détournement du courant hydraulique, et donc le fonctionnement de la deuxième valve pilote (S6) et de la deuxième valve principale (V6), étant surveillés par l'interrupteur électrique (E3) qui est adjoint à la première valve principale (V5) et à la première valve pilote (S5).

FIG.1

PR

M2

S1    E1

V1

E2

S2

V2

H2

T2    L2

S5

V5

E3

R1    S6

V6    D1

H4    H1    H3

M1    P

T1    L1

0 017 868

FIG.2

FIG.3

FIG.4

FIG.5